Europäisches Patentamt

**European Patent Office**

**Office européen des brevets**

(11) Veröffentlichungsnummer: **0 010 068 B1**

(12) **EUROPÄISCHE PATENTSCHRIFT**

(45) Veröffentlichungstag der Patentschrift:
**20.01.82**

(21) Anmeldenummer: **79810114.3**

(22) Anmeldetag: **03.10.79**

(51) Int. Cl.³: **A 21 C 9/08, B 62 B 3/00**

(54) **Stickenwagen für Backbleche.**

(30) Priorität: **03.10.78 CH 10260/78**

(43) Veröffentlichungstag der Anmeldung:
**16.04.80 Patentblatt 80/8**

(45) Bekanntmachung des Hinweises auf die Patenterteilung:
**20.01.82 Patentblatt 82/3**

(84) Benannte Vertragsstaaten:
**AT CH DE FR GB IT SE**

(56) Entgegenhaltungen:
**GB-A-1 260 035**

(73) Patentinhaber: **LOCHER HANDELS AG, Baurstrasse 14, CH-8034 Zürich (CH)**

(72) Erfinder: **Locher, Theodor, Waldgartenstrasse 18, CH-8125 Zollikerberg (CH)**

(74) Vertreter: **Schmid, Rudolf et al, c/o ISLER & SCHMID Patentanwaltsbureau Walchestrasse 23, CH-8006 Zürich (CH)**

ACTORUM AG.

## Stickenwagen für Backbleche

Die Erfindung befasst sich mit Stickenwagen für Backbleche, wobei der Wagen einen fahrbaren Untersatz aufweist, auf dem ein Traggestell mit übereinander angeordneten, horizontalen Backblechhalterungen befestigt ist.

Solche Stickenwagen werden in Bäckereien und Konditoreien verwendet. Die bekannten Wagen weisen an den vier Ecken vertikale Stützen auf, an denen horizontale Auflagen zum Einschieben und Halten der Bleche angeordnet sind.

Zur Herstellung von Backwaren aller Art werden die ungegärten Teiglinge, z.B. Gipfel, auf die Backbleche gelegt und letztere in den Stickenwagen eingeschoben. Da die noch ungegärten Teiglinge eine sehr geringe Höhe aufweisen, ist es möglich, je nach Wagenkonstruktion, bis zu dreissig Backbleche einzuschieben.

Der beladene Stickenwagen kann nun vor der Gärung in einen Kühlraum gerollt werden. Er beansprucht im Kühlraum eine Bodenfläche, die der Backblechfläche zusätzlich der Stützkonstruktion des Wagens entspricht.

Müssen die Teiglinge gegärt werden, so ergibt dies eine Volumenzunahme, die einen grösseren Abstand zwischen den einzelnen Blechen erfordert. Im bisherigen Verfahren wurde jeweils jedes zweite Blech herausgenommen und in einem anderen Wagen deponiert. Der eine Wagen mit der Hälfte der ursprünglichen Beladung verblieb im Kühlraum, der zweite Wagen wurde in den Gärraum gefahren. Das Umladen bringt eine zeitaufwendige Manipulation mit sich, bei der eine allfällige Beschädigung der Teiglinge nicht ausgeschlossen werden kann.

Nach dem Gären werden die Wagen in die Stikköfen (Unluftöfen mit stehendem oder rotierendem Backwagen) gefahren, um die Teiglinge zu backen. Da bei den Stickenöfen der Luftstrom quer zwischen den Blechen durchgeblasen wird, verursachen die zwischen den Backblechen leer gelassenen Auflagen eine Behinderung des Luftstromes, so dass die Backeigenschaften negativ beeinflusst werden.

Aus der GB-A-1 260 039 ist ein Stickenwagen bekannt, der geneigte seitliche Blechauflagen aufweist. Damit wird erreicht, dass mehrere Wagen in unbeladenem Zustand teilweise ineinandergefahren werden können, so dass sich ein bescheidener Platzvorteil ergibt. Ein vollständiges Ineinanderschieben zweier Wagen ist nicht möglich. Auch ist es nicht möglich, die Wagen im beladenen Zustand, d.h. mit Backblechen und Backwaren beladen, ineinanderzuschieben, so dass sich im Produktionsablauf kein Vorteil ergibt.

Ein weiterer Nachteil des Wagens gemäss dem englischen Patent besteht in der Neigung, wenn mit beladenen Blechen gefahren wird. Ein kleiner Fahrstoss durch eine Schwelle oder das Anfahren würden unweigerlich zum Abrollen von runden Teigstücken oder erst recht von fertig gebackenen, runden Backwaren, z.B. Semmeln, usw., führen, die dann auf den Boden fallen.

Die Erfindung stellt sich nun zur Aufgabe, diese Nachteile zu beheben. Erfindungsgemäss erfolgt dies so, dass je zwei Stickenwagen ein ineinanderschiebbares Wagenpaar bilden, dass die frei nach vorne ragenden Backblechhalterungen der beiden Wagen in der Höhe versetzt zueinander angeordnet sind, und dass mindestens an einem der beiden Wagen eine Führung angebracht ist zum Ausrichten und Zusammenhalten der ineinandergeschobenen Wagen.

Diese Lösung weist verschiedene Vorteile auf. Zum Stapeln der Bleche im Kühlraum werden die beiden Wagen des Wagenpaares ineinandergeschoben und beanspruchen nicht mehr Platz als ein einziger Wagen. Für die Gärung können die Wagen einfach auseinandergezogen werden, ohne Umschichtung der Bleche. Zwischen den Backblechen des einzelnen Wagens ist nun genügend Raum für die Volumenzunahme der Teiglinge vorhanden.

Nach der Gärung werden die Wagen ebenfalls einzeln in den Backofen gerollt. Im Gegensatz zu den bekannten Stickenwagen, wo jede zweite Backblechhalterung leer ist und die Luftzirkulation im Ofen behindert, sind bei den erfindungsgemässen Stickenwagen die Backbleche optimal der Heizwirkung des Ofens ausgesetzt.

Nachfolgend werden anhand der Zeichnungen Ausführungsbeispiele der Erfindung näher erläutert. Es zeigen:

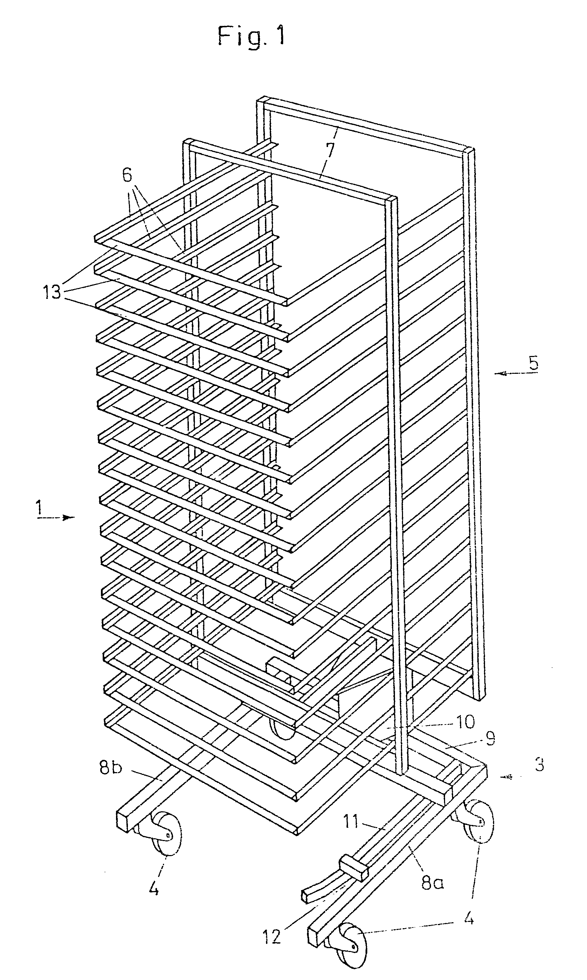

Fig. 1 einen Stickenwagen eines Stickenwagenpaares in perspektivischer Ansicht,

Fig. 2 eine Seitenansicht der beiden Stickenwagen des Stickenwagenpaares vor dem Ineinanderschieben,

Fig. 3 eine Draufsicht auf die ineinandergeschobenen Fahruntersätze, wobei die Traggestelle zur besseren Veranschaulichung nicht gezeichnet sind.

Jeder der beiden Stickenwagen 1, 2 besitzt einen fahrbaren Untersatz 3 mit gummibereiften Lenkrollen 4. Das Traggestell 5 mit den horizontalen Backblechhalterungen 6 ist mittels Schrauben auf dem Untersatz 3 befestigt. Das Traggestell 5 besteht aus zwei rechteckigen, hochgestellten Profilrahmen 7, an denen die als Winkelprofilschienen ausgebildeten Backblechhalterungen 6 angeschweisst sind.

Die Backblechhalterungen 6 sind in gleichmässigen Abständen übereinander angeordnet und ragen (in Einschieberichtung des Stickenwagens gesehen) freitragend nach vorne. Die vorderen Enden je zweier Winkelprofilschienen sind durch Flachstahl-Querstreben 13 miteinander verbunden.

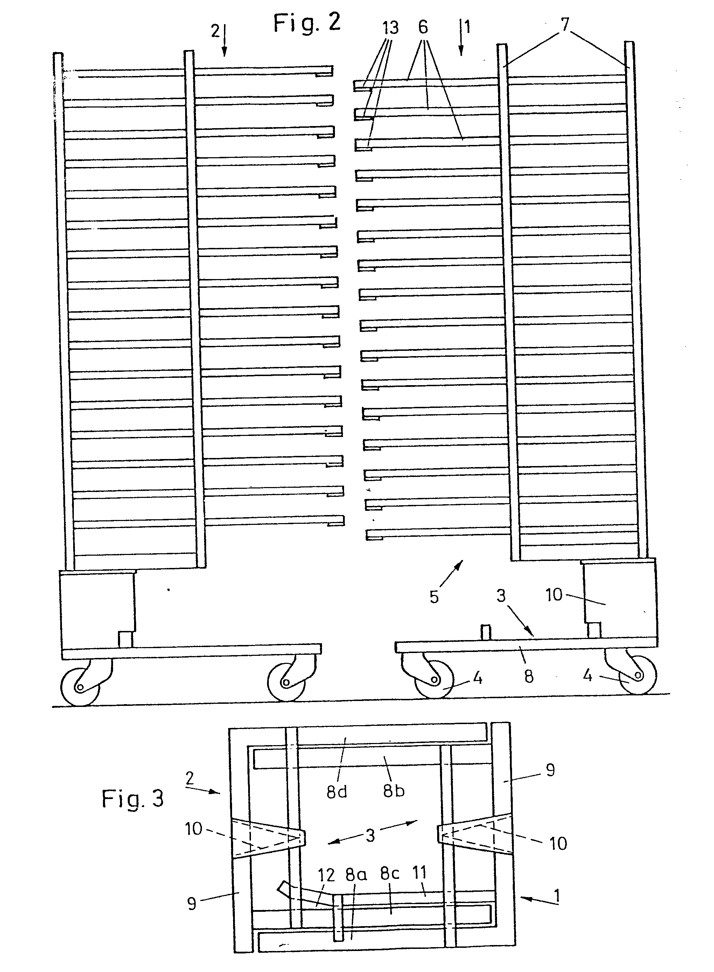

Wie aus der Fig. 2 ersichtlich ist, sind die Backblechhalterungen 6 der beiden Wagen 1, 2 des Wagenpaares in der Höhe versetzt zueinander angeordnet, so dass beim Ineinanderschieben die Backblechhalterungen des einen Wagens 1 in die Zwischenräume der Backblechhalterungen des anderen Wagens 2 zu liegen kommen.

Die Fahruntersätze 3 sind ebenfalls aus Profilen aufgebaut. Jeder Untersatz 3 umfasst zwei frei nach vorne ragende, parallele Längsträger 8a–8d, die hinten mittels zweier Querträger 9 miteinander versteift sind. Mittig zwischen den Querträgern 9 ist ein aus Eisenblech konstruierter Keil 10 an den ersteren befestigt. Das Traggestell 5 ist auf dem Keil 10 aufgeschraubt.

Beim einen Wagen 1 ist neben dem Längsträger 8a eine Führungsschiene 11 montiert, deren vorderes Ende von diesem Längsträger 9 nach innen weggebogen ist. Dadurch entsteht zwischen der Führungsschiene 11 und ihrem benachbarten Längsträger 8a ein vorne erweiterter Führungskanal 12, in welchem der entsprechende, etwas nach innen versetzte Längsträger 8d des anderen Wagens 2 beim Ineinanderschieben eindringt.

Der zweite Längsträger 8d des ersten Wagens ist ebenfalls etwas nach innen versetzt, wie der Längsträger 8c des zweiten Wagens 2. Dadurch wird erreicht, dass die beiden einander zugeordneten Längsträger 8a, 8c bzw. 8b, 8d beim Einschieben eng benachbart nebeneinander zu liegen kommen. Aus den Figuren ist ersichtlich, dass die beanspruchte Bodenfläche der beiden ineinandergeschobenen Wagen 1, 2 gleich gross ist wie die Bodenfläche jedes einzelnen Wagens.

Bei der vorbeschriebenen und dargestellten Ausführungsform handelt es sich um Stickenwagen für einen Ofen, der ungefähr 30 cm ab Boden steht. Bei Stickenwagen wird beim Backen unter die Ofenplatte gefahren, die an ihrer Vorderseite einen keilförmigen Ausschnitt aufweist zum Aufnehmen des Keils 10 auf den Fahruntersatz. Der Stickenwagen könnte aber auch so ausgeführt werden, dass das Traggestell direkt auf den Profilträgern des Fahruntersatzes befestigt wäre; dies für Backöfen, bei denen mit dem gesamten Wagen in den Ofen eingefahren wird. In diesem Falle sind natürlich keine Gummiräder möglich wegen der hohen Backtemperaturen von ca. 150 bis 270 °C.

Sinngemäss könnte die Führung durch an den Querträgern 9 angebrachte Zapfen und Führungsschienen erzielt werden. Eine Führung ist immer notwendig, damit die ausladenden Backblechhalterungen vor dem Einfahren in das durch den Profilrahmen 7 gebildete Joch geführt werden. Aus diesem Grunde ist es wichtig, dass die Führung im Wagen-Fahruntersatz nicht zuviel Spiel aufweist und ein einwandfreies Ausrichten der beiden Wagen ermöglicht. Andererseits können die Winkelprofile der Backblechhalterungen 6 durch Zwischenstücke im Abstand von den Profilrahmen 7 distanziert werden, so dass das Spiel zwischen den Backblechhalterungen und den Profilrahmen 7 etwas grösser ist als das Spiel im Führungskanal 12. Dadurch wird das Ineinanderschieben der beiden Wagen erleichtert. Die Profilrahmen 7 sind so nach hinten versetzt, dass beide Wagen ganz ineinander geschoben werden können, so dass sie gemeinsam die gleiche Grundfläche beanspruchen wie ein einzelner Wagen.

Statt im Fahruntersatz könnte die Führung auch im Oberteil des Wagens vorgesehen sein. Es wäre auch möglich, zwei Führungen vorzunehmen, die eine im Untersatz, die andere im Oberteil.

**Patentansprüche**

1. Stickenwagen (1) für Backbleche, wobei der Wagen einen fahrbaren Untersatz (3) aufweist, auf dem ein Traggestell (5) mit übereinander angeordneten, horizontalen Backblechhalterungen (6) befestigt ist, dadurch gekennzeichnet, dass je zwei Stickenwagen (1, 2) ein ineinanderschiebbares Wagenpaar bilden, dass die frei nach vorne ragenden Backblechhalterungen (6) der beiden Wagen (1, 2) in der Höhe versetzt zueinander angeordnet sind, und dass mindestens an einem der beiden Wagen (1, 2) eine Führung (11, 12) angebracht ist zum Ausrichten und Zusammenhalten der ineinandergeschobenen Wagen (1, 2).

2. Stickenwagen nach Patentanspruch 1, dadurch gekennzeichnet, dass das Traggestell (5) aus zwei hochgestellten, rechteckigen Profilrahmen (7) besteht, an denen die aus Winkelprofilen gebildeten Backblechhalterungen (6) befestigt sind.

3. Stickenwagen nach Patentanspruch 1, dadurch gekennzeichnet, dass der Fahruntersatz (3) zwei nach vorne ragende, parallele Längsträger (8a–8d) aufweist, die hinten durch Querträger (9) miteinander verbunden sind, und dass auf den letzteren das Traggestell (5) abgestützt ist.

4. Stickenwagen nach Patentanspruch 3, dadurch gekennzeichnet, dass die Führung (11, 12) zum Ausrichten der Wagen (1, 2) im Fahruntersatz (3) und/oder im Oberteil der Wagen (1, 2) angeordnet ist.

5. Stickenwagen nach Patentanspruch 3, dadurch gekennzeichnet, dass bei beiden Fahruntersätzen (3) je einer der Längsträger (8a–8d) derart parallel nach innen versetzt ist, dass beim Ineinanderschieben der Wagen (1, 2) je zwei einander zugeordnete Längsträger 8a, 8c, bzw. 8b, 8d) eng benachbart nebeneinander zu liegen kommen.

6. Stickenwagen nach Patentanspruch 1, dadurch gekennzeichnet, dass die beanspruchte Bodenfläche jedes einzelnen Wagens (1, 2) gleich gross ist wie die beanspruchte Bodenfläche des ineinander geschobenen Wagenpaares.

7. Stickenwagen nach Patentanspruch 5, dadurch gekennzeichnet, dass die Führung (11) eine Schiene ist, die neben einem der Längsträger (8a) so angeordnet ist, dass zwischen diesem und der Schiene ein Führungskanal (12) gebildet ist, in welchem der zugeordnete Längsträger (8c) einführbar ist.

8. Stickenwagen nach Patentanspruch 7, dadurch gekennzeichnet, dass das vordere Ende der Schiene (11) von ihrem Längsträger (8a) nach innen weggebogen ist, um das Einführen des zugeordneten Längsträgers zu erleichtern.

9. Stickenwagen nach Patentanspruch 2, dadurch gekennzeichnet, dass die Winkelprofile der Backblechhalterungen (6) durch Zwischenstücke im Abstand von den Profilrahmen (7) gehalten sind.

10. Stickenwagen nach den Patentansprüchen 4 und 7, dadurch gekennzeichnet, dass die Dicke der Zwischenstücke für die Winkelprofile grösser ist als das Spiel im Führungskanal (12).

**Revendications**

1. Chariot (41) pour le dépôt par empilage de plaques de cuisson au four de patisserie ou analogues, comportant un châssis inférieur (3) déplaçable sur roues, sur lequel est fixé un bâti de support (5) avec organes horizontaux superposés (6) de maintien des plaques de cuisson au four, chariot caractérisé en ce que deux chariots (1, 2) forment une paire de chariots emboîtables l'un dans l'autre par glissement, les organes (6) de support de plaques, saillants librement vers l'avant, des deux chariots (1, 2) étant décalés en hauteur l'un par rapport à l'autre, et, au moins un guidage (11, 12) étant prévu sur l'un des deux chariots (1, 2) pour orienter et maintenir assemblés les chariots emboîtés.

2. Chariot suivant la revendication 1, caractérisé en ce que le bâti de support (5) se compose de deux cadres rectangulaires en profilés (7) disposés verticalement auxquels sont fixés les organes de maintien de plaques de cuisson (6) formés de profilés cornières.

3. Chariot suivant la revendication 1, caractérisé en ce que le châssis inférieur de roulage (3) présente deux longerons parallèles (8a à 8d) saillants vers l'avant qui sont réunis entre eux par des traverses (9) sur lesquelles est supporté la bâti de support de plaques (5).

4. Chariot suivant la revendication 3, caractérisé en ce que le guidage (11, 12) pour l'orientation des chariots (1, 2) est disposé dans le châssis de roulage (3), et/ou dans la partie supérieure des chariots.

5. Chariot suivant la revendication 3, caractérisé en ce que dans chacun des deux châssis inférieurs de roulage (3), l'un des longerons (8a à 8d) est décalé, parallèlement, vers l'intérieur, de telle sorte que, lors de l'emboîtement réciproque des chariots (1, 2), deux longerons correspondants (8a, 8c et 8b, 8d) viennent se placer étroitement l'un contre l'autre.

6. Chariot suivant la revendication 1, caractérisé en ce que la surface de fond intéressée de chacun des chariots individuels est de même grandeur que la surface de fond formée par la paroi de chariots emboîtés.

7. Chariot suivant la revendication 5, caractérisé en ce que le guidage (11) est constitué par un rail qui est disposé près de l'un des longerons (8a) de telle manière que, entre ce longeron et le rail soit formé un canal de guidage (12) dans lequel peut être introduit le longeron correspondant (8c) de l'autre chariot.

8. Chariot suivant la revendication 7, caractérisé en ce que l'extrémité antérieure du rail de guidage (11) est recourbée vers l'intérieur avec éloignement de son longeron (8a) en vue de faciliter l'introduction du longeron correspondant (8c) de l'autre chariot.

9. Chariot suivant la revendication 2, caractérisé en ce que les profilés cornières des oranges (6) de maintien de plaques de cuisson sont maintenus à distance des cadres en profilés (7) au moyen de pièces intermédiaires d'espacement.

10. Chariot suivant l'une quelconque des revendications 4 et 7, caractérisé en ce que l'épaisseur des pièces intermédiaires d'espacement pour les profilés cornières est supérieure au jeu prévu dans le canal de guidage (12).

**Claims**

1. Rack trolley for baking trays, the trolley having a movable base (3), on which is secured a carrying frame (5) with horizontal baking-tray holders (6) arranged one above the other characterized in that every two rack trolleys (1, 2) form a pair of trolleys which can be pushed one into the other, that the free forwardly-projecting baking-tray holders (6) of the two trolleys (1, 2) are arranged upwardly-displaced one with regard to the other, and that at least on one of the two trolleys (1, 2) is mounted a guide (11, 12) for aligning and holding together the trolleys (1, 2) pushed one into the other.

2. Rack trolley according to Patent Claim 1, characterized in that the carrying frame (5) consists of two raised, rectangular frame-members (7), to which are secured the baking-tray holders (6) formed from angled sections.

3. Rack trolley according to Patent Claim 1, characterized in that the movable base (3) has two forwardly-projecting, parallel longitudinal carriers (8a–8d), which are connected with each other at the back by means of cross-members (9) and that on on the latter is supported the carrying frame (5).

4. Rack trolley according to Patent Claim 3, characterized in that the guide (11, 12) for aligning the trolley (1, 2) is arranged in the movable base (3) and/or in the upper part of the trolley (1, 2).

5. Rack trolley according to Patent Claim 3, characterized in that with both movable bases (3) each one of the longitudinal carriers (8a–8d) is inwardly displaced in such a parallel manner that when the trolleys (1,2) are pushed one into the other, each two paired longitudinal carriers (8a, 8c and/or 8b, 8d) come to lie closely adjacent each other.

6. Rack trolley according to Patent Claim 1, characterized in that the floor space required for each individual trolley (1, 2) is as great as the floor space required for the pair of trolleys pushed one into the other.

7. Rack trolley according to Patent Claim 5, characterized in that the guide (11) is a rail, which is so arranged beside one of the longitudinal carriers (8a) that between this and the rail there is formed a guide channel (12) into which the associated longitudinal carrier (8c) can be inserted.

8. Rack trolley according to Patent Claim 7, characterized in that the forward end of the rail (11) is bent inwardly away from its longitudinal carrier (8a), in order to facilitate the insertion of the associated longitudinal carrier.

9. Rack trolley according to Patent Claim 2, characterized in that the angle sections of the

**0 010 068**

baking-tray holders (6) are kept at a distance from the frame-members (7) by spacers.

10. Rack trolley according to Patent Claims 4

Fig. 1

Fig. 2

2/2

Fig. 3